# EUROPÄISCHE PATENTANMELDUNG

(11) **EP 1 123 846 A2**
(43) Veröffentlichungstag der Anmeldung: **16.08.2001**
(21) Anmeldenummer: 01103132.5
(22) Anmeldetag: 09.02.2001
(51) Int. Cl.: B60R 25/04

(54) **Wegfahrsperre für ein von einem Verbrennungsmotor angetriebenes Fahrzeug**

(30) Priorität: 12.02.2000 DE 10006300
(71) Anmelder: Martens, Heiko, 21640 Bliedersdorf (DE)
(72) Erfinder: Martens, Heiko, 21640 Bliedersdorf (DE)
(74) Vertreter: Patentanwälte Hauck, Graalfs, Wehnert, Döring, Siemons

(57) **Zusammenfassung**

Wegfahrsperre für Fahrzeuge, die von einem Verbrennungsmotor angetrieben sind, der einen Zündimpulsgeber aufweist, der mit einem mit der Kurbelwelle des Motors gekoppelten Initiator zusammenwirkt, mit
- einer Schaltungsanordnung, die einen Unterbrecherschalter oder einen Kurzschlussschalter und eine Schalterbetätigungsschaltung aufweist derart, dass die Schalterbetätigungsschaltung den Unterbrecherschalter schließt bzw. den Kurzschlussschalter öffnet, wenn sie ein vorgegebenes Signal empfängt
- einer elektrischen Verbindung zwischen der Zündimpulsgeber und einer für den Motor, in welche entweder der Unterbrecherschalter geschaltet ist oder einer Kurzschlussschaltung für den Zündimpulsgeber, in welche der Kurzschlussschalter geschaltet ist und
- einer unlösbaren Einheit aus Schaltungsanordnung und Zündimpulsgeber.

## Beschreibung

Die Erfindung bezieht sich auf eine Wegfahrsperre für Fahrzeuge, die von einem Verbrennungsmotor angetrieben sind, nach dem Patentanspruch 1.

Eine allgemein verwendete Wegfahrsperre für Fahrzeuge besteht in einer mechanischen Blockierung der Lenkung. Bei Straßenfahrzeugen, einschließlich Motorrädern wird die Sperre entriegelt, wenn ein Zündschlüssel im Zündschloss betätigt wird. Mechanische Wegfahrsperren haben jedoch den Nachteil, dass sie bei Anwendung entsprechender Gewalt zerstört werden können und dadurch unwirksam werden.

Es sind jedoch auch elektrische bzw. elektronische Wegfahrsperren bekannt geworden, die auf die unterschiedlichste Art und Weise wirken. Eine besteht zum Beispiel darin, dass in einer Leitung zwischen dem Zündschloss und der Zündsteuerschaltung ein Schalter eingebaut ist, der eine Unterbrechung zwischen Zündschloss und Zündschaltung herbeiführt, wenn er nicht aufgrund eines entsprechenden Codesignals geschlossen wird (WO 97/25227). Das Codesignal kann vom Zündschloss kommen und dort in geeigneter Weise erzeugt werden. Nachteilig bei dieser Wegfahrsperre ist jedoch, dass die Sperrschaltung einfach aus den elektrischen Leitungen herausgetrennt bzw. überbrückt werden kann.

Der Erfindung liegt die Aufgabe zugrunde, eine Wegfahrsperre für Fahrzeuge zu schaffen, die von einem Verbrennungsmotor angetrieben sind und die einfach aufgebaut ist und mit geringem Aufwand eingesetzt werden kann.

Diese Aufgabe wird durch die Merkmale des Patentanspruchs 1 gelöst.

Bei der Erfindung ist eine Schaltungsanordnung vorgesehen, die zum Einen einen elektronischen Unterbrecherschalter oder einen Kurzschlußschalter aufweist und zum Anderen eine Schalterbetätigungsschaltung. Der Unterbrecherschalter liegt in einer Leitung, die von einem Zündimpulsgeber, z.B. Zündgeberspule, zu einer Zündsteuerschaltung führt. Zündimpulsgeber werden allgemein für Zweitakt- und Viertaktmotoren eingesetzt. Mit der Kurbelwelle des Motors ist ein Initiator gekoppelt, der sich z.B. an einer sogenannten Polscheibe befindet, der mit einer rahmenfesten Induktionsspule zusammenwirkt. Pro Umdrehung wird in der Induktionsspule ein Impuls erzeugt, der die Erzeugung des Zündimpulses für den Motor steuert.

Der Kurzschlussschalter hingegen schließt die Klemmen des Zündimpulsgebers kurz, so dass Zündgeberimpulse nicht mehr erzeugt werden.

Bei der erfindungsgemäßen Wegfahrsperre wird die Schaltungsanordnung, welche die oben beschriebenen Schaltungsteile enthält, unlösbar als Einheit mit dem Zündimpulsgeber gebildet. Dies kann nach einer Ausgestaltung der Erfindung dadurch geschehen, dass z. B eine Leiterplatte durch eine sogenannte Einwegbefestigung mit einem Gehäuse des Zündimpulsgebers verbunden wird. Bei einer solchen Einwegbefestigung ist es nicht möglich, die Schrauben oder die Nieten durch einfache Werkzeuge zu lösen. Besonders bevorzugt ist jedoch das Vergießen der Schaltungsanordnung bzw. der Leiterplatte mit dem Zündimpulsgeber bzw. mit dessen Gehäuse. Wird die Verbindung zwischen dem Zündimpulsgeber und der Schaltungsanordnung getrennt, kann dies nur dadurch geschehen, dass die Schaltungsanordnung bzw. die integrierte Schaltung sowie die Zündimpulsgeber zerstört wird. Ein späteres Starten des Motors ist dann nicht mehr möglich.

Die erfindungsgemäße Vorrichtung hat den Vorteil, dass der Zündimpulsgeber naturgemäß an einem schlecht zugänglichen Ort angebracht ist. Außerdem kann bei der erfindungsgemäßen Vorrichtung eine Überbrückung oder ein Öffnen des Schalters nicht ohne weiteres vorgenommen werden. Durch ein gewaltsames Entfernen z. B. der Leiterplatte ist die Möglichkeit genommen, eine von dem Zündimpulsgeber kommende Leitungsverbindung zur Zündsteuerschaltung herzustellen. Leiterplatten, welche einen elektronischen Schalter und eine Schalterbetätigungsschaltung enthalten, sind relativ einfach herstellbar. Es ist auch sehr wenig aufwendig, z. B. eine solche Leiterplatte mit dem Gehäuse eines Zündimpulsgebers zu vergießen.

Die erfindungsgemäße Vorrichtung ist für alle möglichen Fahrzeuge, insbesondere solchen, die mit Zweitaktmotoren betrieben sind, anwendbar, wie zum Beispiel Motorroller, Motorräder, Außenbordmotoren für Boote, Schneescooter, Buggies, Enduros usw. Die erfindungsgemäße Vorrichtung läßt sich leicht in der Serienfertigung integrieren. Sie kann jedoch auch leicht als Nachrüstsatz eingebaut werden.

Für die Ansteuerung der Schalterbetätigungsschaltung ist ein spezielles Signal erforderlich, das von einer Codeerkennungsschaltung kommt, welche ein von einem Codeträger kommendes Signal liest. Für die Realisierung dieser Funktion sind verschiedene Möglichkeiten denkbar. Eine besteht nach einer Ausgestaltung der Erfindung etwa darin, dass eine Empfangs- und Sendeschaltung vorgesehen ist, die mit der Schaltungsanordnung verbunden ist und die auf diese ein Signal überträgt, wenn ein aktiver oder passiver Signalgeber in die Nähe der Empfangs- und Sendeschaltung gebracht wird. Die Empfangsschaltung kann z. B. eine Antenne oder eine Spule enthalten, welche mit dem Signalgeber, z. B. Transponder, in Wechselwirkung tritt. Die Empfangs- und Sendeschaltung kann in der Nähe des Zündschlosses angeordnet sein und z. B. über eine Signalleitung mit der Schaltungsanordnung an dem Zündimpulsgeber verbunden sein. Zum Beispiel kann mit dem Zündschlüssel ein sogenannter Transponder gekoppelt oder in diesen integriert sein. In dem Transponder ist ein Code gespeichert. Der Transponder wird durch ein Signal, das im Zündschloss von der Empfangs- und Sendeschaltung erzeugt wird, aktiviert, so dass er den eingespeicherten Code sendet. Er kann dann in der Codeerkennungsschaltung der Schaltungsanordnung gelesen werden. Nur wenn eine Übereinstimmung mit einem gespeicherten Code vorliegt, wird der Unterbrecherschalter geschlossen bzw. der Kurzschlussschalter geöffnet. Im anderen Fall bleibt er offen bzw. geschlossen, so dass der Motor nicht gestartet werden kann.

Statt eines Transponders am Zündschlüssel kann auch ein separater Codeträger bzw. Signalgeber verwendet werden, z.B. eine Chipkarte, die beispielsweise mit einer entsprechenden Kontaktanordnung im Bereich des Zündschlosses in Kontakt bringbar ist, um ein entsprechendes Signal auf z. B. die Leiterplatte zu übertragen zwecks Erzeugung des Betätigungssignals für den Unterbrecherschalter bzw. den Kurzschlussschalter. Statt einer mechanischen Kontaktierung zwischen einem Codeträger und einer Codeerkennungsschaltung ist auch möglich, eine kontaktlose Übertragung vorzusehen, beispielsweise über HF oder eine IR-Übertragungsstrecke.

Die Erfindung wird nachstehend anhand von Zeichnungen näher erläutert.

Fig. 1 zeigt schematisch eine Schaltungsanordnung für eine Wegfahrsperre nach der Erfindung.

Fig. 2 zeigt eine Schaltungseinzelheit der Leiterplatte nach Fig. 1.

In Fig. list ein sogenanntes Polrad 10 dargestellt, das zum Beispiel auf der Kurbelwelle des Motors eines Motorrollers oder dergleichen sitzt. Am Umfang des Polrads 10 ist ein Initiator 12 angeordnet, der sich nur über einen gewissen Umfangsbereich erstreckt. Der Initiator 12 wirkt mit einem Anker 14 einer Zündgeberspule 16 zusammen. Bei jeder Umdrehung des Polrads 10 wird von der Spule 16 ein Impuls erzeugt, der auf eine Zündschaltung 18 gegeben wird zur Erzeugung eines Zündimpulses über eine Zündspule, wie an sich bekannt. Die beschriebene Schaltung ist ebenfalls bereits bekannt.

Zur beschriebenen Zündschaltung gehört auch ein Zündschloss 20, in das ein Zündschlüssel 22 gesteckt werden kann. Die Kopplung von Zündschloss 20 und Zündschlüssel 22 signalisiert die Startbereitschaft des Motors bzw. initiiert das Starten des Motors. Auch insoweit liegt keine Besonderheit gegenüber dem Stand der Technik vor.

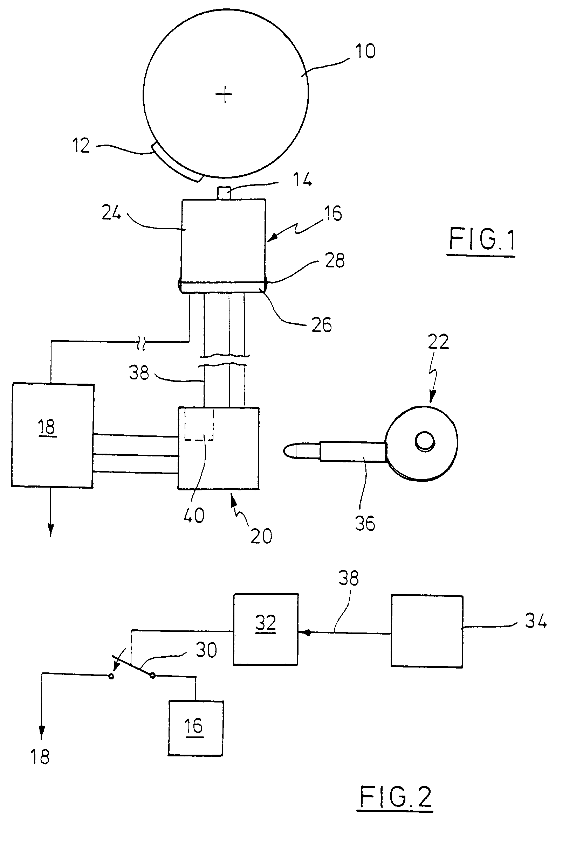

Mit dem Gehäuse 24 der Zündspule 16 ist eine Leiterplatte 26 fest vergossen, beispielsweise mit Gießharz, wie bei 28 angedeutet. Die Leiterplatte 26 ist mit ihren Schaltungsbauteilen teilweise in Fig. 2 dargestellt.

Man erkennt, dass zwischen der Zündgeberspule 16 und der Zündschaltung 18 ein Unterbrecherschalter 30 geschaltet ist, der vorzugsweise elektronisch ausgeführt ist, was jedoch nicht gezeigt ist. Der Schalter 30 wird von einer Betätigungsschaltung 32 betätigt, wobei diese ihrerseits ein Signal erhält von einer Codeerkennungsschaltung 34, die auf der Leiterplatte 26 angebracht ist. Mit dem Zündschlüssel 22 ist ein Transponder 36 gekoppelt, in dem ein Code gespeichert ist. Wird der Schlüssel 22 in das Schloss 20 eingeführt und das Schloss betätigt, tritt eine Empfangs- und Sendeschaltung 40 mit dem Transponder in Wechselwirkung und aktiviert letzteren zur Erzeugung eines Codesignals, das von der Schaltung 40 empfangen und über eine Leitung 38 zur Leiterplatte 26 hin übertragen wird. Eine Codeerkennungsschaltung auf der Leiterplatte liest den Code des Transponders 36. Entspricht der Code des Transponders 36 dem gespeicherten Code in der Codeerkennungsschaltung 34, erzeugt letztere ein Signal für die Betätigungsschaltung 32 (Fig. 2), welche den Schalter 30 schließt, so dass die Impulse der Zündgeberspule 16 auf die Zündschaltung 18 übertragen werden können. Alternativ zum Unterbrecherschalter 30 kann auch ein Kurzschlussschalter vorgesehen werden, der die Zündgeberspule 16 kurzschließt und nur öffnet, wenn aufgrund des Code-Vergleichs die Berechtigung nachgewiesen ist.

Es versteht sich, dass auch ein getrennter Codeträger vorgesehen werden kann, der in die Nähe oder in Berührung mit einer Empfangs- und Sendeschaltung am Zündschloss oder einem anderen Ort gebracht werden kann, damit ein entsprechendes Signal auf die Leiterplatte 26 übertragen wird. Es ist auch denkbar, auf der Leiterplatte 26 eine Empfangs- und Sendeschaltung anzuordnen, die mit einem Transponder oder einem ähnlichen als Codeträger dienenden Signalgeber in Wechselwirkung tritt, um festzustellen, ob eine berechtigte Person im Begriff ist, den Motor zu starten. Statt einer kontaktbehafteten Übertragung oder Wechselwirkung zwischen dem Codeträger und der Empfangsschaltung ist auch denkbar, eine kontaktlose Übertragungsstrecke vorzusehen, beispielsweise eine HF- oder IR-Strecke.

## Patentansprüche

1. Wegfahrsperre für Fahrzeuge, die von einem Verbrennungsmotor angetrieben sind, der einen Zündimpulsgeber aufweist, der mit einem mit der Kurbelwelle des Motors gekoppelten Initiator zusammenwirkt, mit
- einer Schaltungsanordnung (26), die einen Unterbrecherschalter (30) oder einen Kurzschlussschalter und eine Schalterbetätigungsschaltung (32) aufweist derart, dass die Schalterbetätigungsschaltung (32) den Unterbrecherschalter (30) schließt bzw. den Kurzschlussschalter öffnet, wenn sie ein vorgegebenes Signal empfängt
- einer elektrischen Verbindung zwischen der Zündimpulsgeber (16) und einer Zündschaltung (18) für den Motor, in welche entweder der Unterbrecherschalter (30) geschaltet ist oder einer Kurzschlussschaltung für dem Zündimpulsgeber, in welche der Kurzschlussschalter geschaltet ist und
- einer unlösbaren Einheit (28) aus Schaltungsanordnung (26) und Zündimpulsgeber (16).

2. Wegfahrsperre nach Anspruch 1, dadurch gekennzeichnet, dass die Zündimpulsgeber (16) und die Schaltungsanordnung (26) durch eine Vergussmasse zu einer Einheit gebildet sind.

3. Wegfahrsperre nach Anspruch 1 oder 2, dadurch gekennzeichnet, dass die Schaltungsanordnung auf einer Leiterplatte (26) ausgebildet ist.

4. Wegfahrsperre nach einem der Ansprüche 1 bis 3, dadurch gekennzeichnet, dass Zündimpulsgeber und Schaltungsanordnung in einem gemeinsamen Gehäuse angeordnet sind.

5. Wegfahrsperre nach einem der Ansprüche 1 bis 3, dadurch gekennzeichnet, dass eine Leiterplatte unlösbar an einem Gehäuse für den Zündimpulsgeber angebracht ist.

6. Wegfahrsperre nach einem der Ansprüche 3 bis 5, dadurch gekennzeichnet, dass die Leiterplatte (26) mittels Einwegschrauben oder Nieten am Gehäuse angebracht ist.

7. Wegfahrsperre nach einem der Ansprüche 5 und 6, dadurch gekennzeichnet, dass das Gehäuse mittels einer Einwegbefestigung an einer Haltestruktur des Fahrzeugs befestigbar ist.

8. Wegfahrsperre nach einem der Ansprüche 1 bis 7, dadurch gekennzeichnet, dass eine Empfangs- und Sendeschaltung am Fahrzeug angeordnet ist, die mit der Schaltungsanordnung verbunden ist und die ein Signal auf die Schaltungsanordnung überträgt, wenn ein aktiver oder passiver Signalgeber in die Nähe der Empfangs- und Sendeschaltung gebracht wird.

9. Wegfahrsperre nach Anspruch 8, dadurch gekennzeichnet, dass die Empfangs- und Sendeschaltung nahe dem Zündschloss (20) angeordnet ist.

10. Wegfahrsperre nach Anspruch 8 oder 9, dadurch gekennzeichnet, dass der Signalgeber mechanisch mit dem Zündschlüssel (22) verbunden ist.

11. Wegfahrsperre nach Anspruch 8, dadurch gekennzeichnet, dass ein getrennter Signalgeber vorgesehen ist, der durch mechanischen Kontakt mit der Empfangs- und Sendeschaltung in Wechselwirkung tritt.

12. Wegfahrsperre nach einem der Ansprüche 8 bis 11, dadurch gekennzeichnet, dass die Empfangs- und Sendeschaltung nahe der Schaltungsanordnung angeordnet ist für das kontaktlos von dem Signalgeber erzeugte Signal.

13. Wegfahrsperre nach einem der Ansprüche 8 bis 12, dadurch gekennzeichnet, dass das Signal vom Signalgeber über eine IR- oder HF-Strecke übertragen wird.
